# FASCICULE DE BREVET EUROPEEN

(11) **EP 2 056 054 B1**
(45) Date de publication et mention de la délivrance du brevet: **30.11.2016**
(21) Numéro de dépôt: 08167143.0
(22) Date de dépôt: 21.10.2008
(51) Int. Cl.: F28D 1/03

(54) **Tube pour échangeur thermique**
Rohr für einen Wärmetauscher
TUBE FOR HEAT EXCHANGER

(30) Priorité: 31.10.2007 FR 0707650
(43) Date de publication de la demande: 06.05.2009
(73) Titulaire: VALEO SYSTEMES THERMIQUES, 78321 Le Mesnil Saint-Denis Cedex (FR)
(72) Inventeur: Denoual, Christophe, 72430 Noyen Sur Sarthe (FR)
(74) Mandataire: Léveillé, Christophe

(56) Documents cités:
- EP-A- 1 645 830
- FR-A- 2 832 788
- JP-A- 2005 337 527

## Description

La présente invention concerne un tube pour échangeur thermique selon le préambule de la revendication 1. Un tel échangeur est connu de JP2005337527.

L'invention trouve une application particulièrement avantageuse dans le domaine des échangeurs de chaleur à tubes plats. Ces échangeurs sont utilisés notamment comme évaporateur, condenseur ou aérotherme de chauffage dans un système de conditionnement d'air d'un véhicule automobile, ou comme radiateur dans le circuit de refroidissement d'un tel véhicule.

Les échangeurs de chaleur à tubes plats pour véhicules automobiles sont généralement constitués par un faisceau de tubes plats disposés parallèlement sur une ou plusieurs rangées, ces tubes étant destinés à la circulation à travers l'échangeur d'un fluide caloporteur, tel que de l'eau additionnée de glycol dans le cas des radiateurs de circuits de refroidissement de moteurs. L'eau en refroidissant les organes du moteur s'échauffe et doit à son tour être refroidie. C'est le rôle du radiateur d'assurer cette fonction. A cet effet, l'eau glycolée est mise en circulation dans les tubes du radiateur et se refroidit par échange thermique avec de l'air frais venant d'un pulseur, ou ventilateur, l'échange thermique étant favorisé par la présence d'éléments d'échange de chaleur disposés dans le faisceau de tubes. Dans le cas d'un aérotherme, l'énergie thermique dissipée dans l'air est récupérée pour chauffer l'habitacle d'un véhicule automobile via une installation de ventilation, chauffage et/ou climatisation connue en soit.

Selon la technologie d'assemblage de l'échangeur de chaleur dite « par brasage », les tubes sont brasés sur des éléments d'échange de chaleur constitués par des intercalaires ou ailettes placés entre les tubes. En général, ces intercalaires sont réalisés sous forme de surface ondulée, les tubes étant brasés sur les intercalaires au niveau des sommets des ondulations. L'ensemble des tubes et des intercalaires ainsi assemblés par brasage est coiffé à chaque extrémité par une boîte collectrice raccordée par des conduits au reste du circuit.

Les tubes plats peuvent être obtenus par diverses techniques, comme l'extrusion, le mécano-soudage, ou le pliage. L'invention s'adresse à cette dernière technique dans laquelle chaque tube plat est réalisé en pliant d'une feuille métallique appelée feuillard, afin de définir un conduit de circulation pour le fluide caloporteur, en l'occurrence l'eau. Le feuillard est constitué d'un matériau de base autrement appelé âme, généralement un alliage d'aluminium.

La demande internationale n° WO 03/046456 propose en particulier un tube plat à cloison de séparation, réalisé à partir d'un feuillard dont une extrémité a été conformée de sorte que la cloison de séparation obtenue après pliage du feuillard présente un profil curviligne, sensiblement en forme de demi-cercle.

Cependant, malgré tous les avantages qu'il procure, le tube plat connu de la demande internationale n° WO 03/046456 présente néanmoins l'inconvénient de n'offrir qu'une faible résistance mécanique au gonflement du tube résultant de la pression exercée par le fluide caloporteur. En effet, sa forme curviligne en arc de cercle confère à la cloison de séparation une certaine flexibilité favorisant son ouverture et donc le gonflement du tube sous l'action de la pression hydraulique.

L'ouverture de la cloison de séparation a pour conséquence de créer une dissymétrie entre les deux canaux de circulation situés de part et d'autre de la cloison, alors que les sections hydrauliques des canaux doivent être égales et le rester quelle que soit la phase de fonctionnement de l'échangeur thermique.

De plus, le gonflement du tube sous pression génère des contraintes mécaniques en plusieurs endroits, notamment sur les rayons du tube et sur la soudure longitudinale à la jonction entre les deux parties repliées du tube.

Enfin, les cycles répétés de gonflement/repos accélèrent la fatigue des matériaux constituant le tube.

Toutes ces phénomènes consécutifs au gonflement du tube plat fragilisent la tenue mécanique de l'échangeur thermique et conduise à l'apparition de défaut d'étanchéité.

Si une épaisseur intérieure du tube est fixée de manière à imposer une section hydraulique donnée aux canaux de circulation, les caractéristiques dimensionnelles de la cloison de séparation doivent être adaptées en conséquence.

Selon la revendication principale, l'invention prévoit alors que ladite cloison de séparation présente le long de ladite boucle une épaisseur inférieure à l'épaisseur du tube.

Un but de l'invention est de proposer un tube pour échangeur thermique qui permettrait d'éviter les inconvénients liés au gonflement sous pression du tube décrit dans la demande internationale précitée, tout en en préservant les avantages tel que l'affranchissement des contraintes de tolérances dimensionnelle en largeur du feuillard et/ou l'enrobage par un matériau de brasage d'une seul des deux faces de l'âme.

Ce but est atteint, conformément à l'invention, grâce à un tube pour échangeur thermique réalisé par pliage d'un feuillard, une extrémité dudit feuillard étant conformée de manière à constituer, après pliage, une cloison de séparation présentant un profil curviligne, remarquable en ce que ledit profil curviligne est un profil en boucle, ladite cloison de séparation étant refermée sur elle-même. Cette caractéristique s'entend par le fait que le bord du feuillard mis en oeuvre dans la cloison de séparation est pris en sandwich dans un pli de forme de « U », ce qui permet de mettre en contact l'enrobage avec le paroi interne du tube dépourvu d'enrobage et ainsi élargir le brasage pour atteindre un haut niveau de résistance au gonflement.

Ainsi, et on le verra en détail plus loin, il est possible, avec le profil curviligne en boucle conféré par l'invention à la cloison de séparation, d'effectuer un premier brasage de la cloison sur la paroi interne du tube en combinaison avec un deuxième brasage de l'extrémité libre de la cloison sur elle-même. L'invention interdisant de ce fait toute possibilité d'ouverture de la cloison, la résistance mécanique de cette dernière à un gonflement du tube s'en trouve considérablement augmentée.

On notera que ce résultat est obtenu en conservant l'avantage de ne pas avoir à enrober de matériau de brasage les deux faces du feuillard. Une face enrobée suffit à la mise en oeuvre de l'invention, l'autre face pouvant recevoir un matériau limitant la corrosion sur la paroi interne du tube.

Selon un mode de réalisation de l'invention, ledit profil curviligne en boucle comprend une première partie de boucle et une deuxième partie de boucle se terminant à l'intérieur de la première partie de boucle.

Dans ce mode de réalisation particulier, il est prévu par l'invention que lesdites première et deuxième parties de boucle ont sensiblement la forme d'arcs de cercle dans lesquels l'épaisseur du feuillard est constante.

Ladite cloison de séparation présente une première épaisseur inférieure à l'épaisseur du tube sur la première partie de boucle, et une deuxième épaisseur inférieure à la première épaisseur sur la deuxième partie de boucle.

La description qui va suivre en regard des dessins annexés, donnés à titre d'exemples non limitatifs, fera bien comprendre en quoi consiste l'invention et comment elle peut être réalisée et participera le cas échéant la définition de cette dernière.
La figure 1 est une vue partielle en coupe d'un tube pour échangeur thermique selon l'invention.
La figure 2a est une vue partielle en coupe d'un feuillard selon une première réalisation de l'invention.
La figure 2b est une vue partielle en coupe d'un feuillard selon une deuxième réalisation de l'invention.

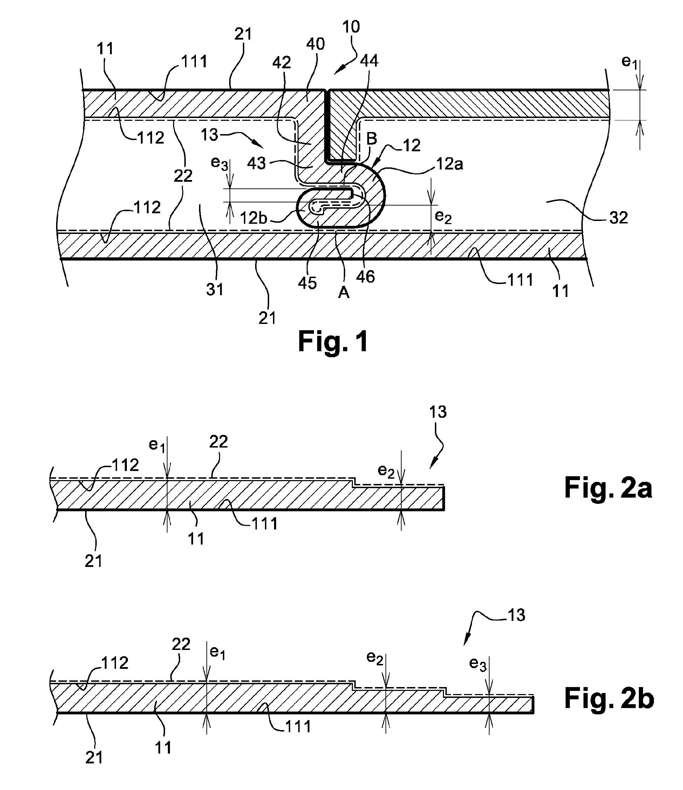

Sur la figure 1 est représenté partiellement en coupe un tube plat 10 pour un échangeur thermique qui peut être indifféremment un évaporateur, un condenseur, un aérotherme ou un radiateur de véhicule automobile.

Le tube 10 est obtenu par formage et pliage d'un feuillard 11 réalisé dans un matériau de base, ou matériau d'âme, qui est généralement un alliage d'aluminium choisi dans les séries notées 1xxx, 3xxx, 6xxx et 7xxx et dont la température de fusion est comprise entre 630 et 660°C.

Avant formage et pliage, le feuillard 11 reçoit, sur une première face 111 qui après pliage constitue la paroi externe du tube 10, une couche 21 de matériau d'apport ou d'enrobage, souvent appelée « clad », constitué d'un alliage d'aluminium de la série 4xxx dont la température de fusion est supérieure à 577°C et inférieure à la température de fusion du métal de l'âme. Cette couche 21 représente la couche de brasage proprement dite qui, par fusion du matériau d'apport dans un four, assurera la tenue mécanique de l'échangeur thermique dont les composants, tubes plats et intercalaires notamment, sont préalablement assemblés. Cette couche de brasage 21 est représentée en gras sur les figures.

Sur une deuxième face 112 du feuillard 11, c'est-à-dire la paroi interne du tube 10 après pliage qui délimite le volume interne du tube, est déposée une couche 22 d'un matériau permettant de diminuer la vitesse de propagation de la corrosion à travers le métal d'âme du feuillard 11. Ce matériau, notamment à base d'aluminium et de silicium, a une température de fusion supérieure à celle du matériau de brasage, ou « clad ». Cette couche de protection 22 est représentée en trait pointillé sur les figures.

Comme on peut le voir sur la figure 1, une extrémité ou bord 13 du feuillard 11 est conformée de manière à réaliser après pliage une cloison 12 de séparation du tube 10 en deux canaux 31, 32 de circulation de fluide caloporteur.

La cloison 12 de séparation est refermée sur elle-même selon un profil curviligne en boucle comprenant une première partie 12a de boucle sensiblement en forme d'arc de cercle, et une deuxième partie 12b de boucle également sensiblement en forme d'arc de cercle se terminant à l'intérieur de la première partie 12a de boucle. Les arcs de cercle présentent une courbure d'environ 180°.

Il est alors possible de braser la cloison 12 en deux zones, à savoir une première zone centrée autour du point A où la cloison est brasée sur la paroi interne 112 du tube 10, et une deuxième zone centrée autour du point B où la cloison est brasée au niveau de l'extrémité de la deuxième partie 12b de boucle sur la paroi interne de la première partie 12a de boucle.

En commençant à partir de la paroi externe du tube, la cloison de séparation comporte un premier pli 41 à 45° vers l'intérieur du tube (sens horaire) suivi d'un premier plat 42 puis d'un deuxième pli 43 à 45° tournée vers l'extérieur du tube (sens anti-horaire), à la suite duquel on trouve un deuxième plat 44 qui reçoit le bord du feuillard non utilisé dans la cloison de séparation. Ce deuxième plat 44 est un élément de la première partie de boucle 12a tournée à 180 ° vers l'intérieur du tube, suivi d'un troisième plat 45 dont la paroi externe fait contact avec la paroi interne du tube. Ce troisième plat 45 est commun à la première et à la deuxième partie de boucle 12a et 12b. Le profil de cloison de séparation continue par la courbure de la deuxième partie de boucle 12b tournée à 180 ° vers l'intérieur du tube (sens horaire) et se termine par le bord du feuillard 46 pris en sandwich entre le deuxième plat 44 et le troisième plat 45.

On obtient ainsi une cloison 12 de séparation très rigide capable de résister à la pression exercée par le fluide caloporteur et donc de s'opposer à tout gonflement du tube 10, notamment par ouverture du profil de la cloison, comme cela se produit pour le tube connu de l'état de la technique. La section hydraulique des canaux 31, 32 est maintenue et aucun report de contrainte sur d'autres éléments du tube ne se produit.

Si la section hydraulique des canaux 31, 32 est fixée, celle-ci peut être obtenue en ajustant les épaisseurs de la cloison 12 sur les première 12a et deuxième 12b parties de boucle.

Selon une première réalisation, la cloison 12 peut avoir une épaisseur e₂ constante le long de la boucle (ou du bord du feuillard), cette épaisseur étant inférieure à l'épaisseur e₁ du tube 10. Dans ce cas, comme l'indique la figure 2a, le feuillard 11 présente au niveau de l'extrémité ou bord 13 un saut d'épaisseur ou épaulement entre les valeurs e₁ et e₂.

Selon une deuxième réalisation, qui est celle représentée sur la figure 2b, la cloison 12 présente une première épaisseur e₂ inférieure à l'épaisseur e₁ du tube 10 sur la première partie 12a de boucle, et une deuxième épaisseur e₃ inférieure à la première épaisseur e₂ sur la deuxième partie 12b de boucle. Dans ce cas, la figure 2b montre deux sauts d'épaisseur sur le feuillard 11, l'un entre les valeurs e₁ et e₂, l'autre entre les valeurs e₂ et e₃.

Les valeurs d'épaisseurs sont :
0.1 mm ≤ e₁ ≤ 0.4 mm
0.05 mm ≤ e₂ ≤ 0.4 mm
0.05 mm ≤ e₃ ≤ 0.4 mm
Si la section hydraulique des canaux 31 et 32 n'est pas fixée alors e₁ = e₂ = e₃. Si la section hydraulique des canaux 31 et 32 est fixée ou imposée, alors on ajuste les épaisseurs comme suit :
- première réalisation : e₃ = e₂ < e₁
   deuxième réalisation : e₃ < e₂ < e₁.

## Revendications

1. Tube (10) pour échangeur thermique réalisé par pliage d'un feuillard (11), une extrémité (13) dudit feuillard étant conformée de manière à constituer, après pliage, une cloison (12) de séparation présentant un profil curviligne, ledit profil curviligne est un profil en boucle, ladite cloison (12) de séparation étant refermée sur elle-même, **caractérisé en ce que** ladite cloison (12) de séparation présente le long de ladite boucle une épaisseur (e₂) inférieure à l'épaisseur (e₁) du tube (10).

2. Tube selon la revendication 1, dans lequel ledit profil curviligne en boucle comprend une première partie (12a) de boucle et une deuxième partie (12b) de boucle se terminant à l'intérieur de la première partie (12a) de boucle.

3. Tube selon la revendication 2, dans lequel lesdites première (12a) et deuxième (12b) parties de boucle ont sensiblement la forme d'arcs de cercle.

4. Tube selon la revendication 3, dans lequel ladite deuxième partie (12b) de boucle est brasé contre une paroi interne du tube.

5. Tube selon la revendication 4, dans lequel ladite deuxième partie (12b) de boucle est brasé sur un deuxième plat (44) qui délimite le début de la première partie (12a) de boucle.

6. Tube selon l'une quelconque des revendications 2 à 5, dans lequel ladite première partie (12a) de boucle est constituée d'un deuxième plat (44) suivi d'une courbure à 180° qui se poursuit par un troisième plat (45) en commun avec ladite deuxième partie (12b) de boucle, ce troisième plat (45) se poursuit par une courbure à 180° qui se termine par un quatrième plat (46) pris en sandwich entre le deuxième plat (44) et le troisième plat (45).

7. Tube selon l'une des revendications 2 à 6, dans lequel ladite cloison (12) de séparation présente une première épaisseur (e₂) inférieure à l'épaisseur (e₁) du tube (10) sur la première partie (12a) de boucle, et une deuxième épaisseur (e₃) inférieure à la première épaisseur (e₂) sur la deuxième partie (12b) de boucle.

8. Tube selon l'une quelconque des revendications précédentes, dans lequel une première face (111) du tube est couverte d'une couche de brasage (21) alors qu'une deuxième face (112) du tube est couverte d'une couche de protection (22) contre la corrosion, ladite deuxième face (112) délimitant le volume interne dudit tube.

9. Echangeur thermique apte à échanger une énergie thermique entre un premier milieu et un fluide qui circule à l'intérieur d'un tube conforme à l'une quelconque des revendications précédentes.

## Patentansprüche

1. Rohr (10) für einen Wärmetauscher, das durch Falzen eines Streifens (11) hergestellt ist, wobei ein Ende (13) des Streifens derart ausgebildet ist, um nach dem Falzen eine Trennwand (12) zu bilden, die gekrümmtes Profil aufweist, wobei das gekrümmte Profil ein Schleifenprofil ist, wobei die Trennwand (12) in sich selbst geschlossen ist, **dadurch gekennzeichnet, dass** die Trennwand (12) entlang der Schleife eine Dicke (e₂) aufweist, die geringer als die Dicke (e₁) des Rohres (10) ist.

2. Rohr nach Anspruch 1, wobei das gekrümmte Schleifenprofil einen ersten Schleifenteil (12a) und einen zweiten Schleifenteil (12b) aufweist, der im Inneren des ersten Schleifenteils (12a) endet.

3. Rohr nach Anspruch 2, wobei der erste (12a) und zweite (12b) Schleifenteil im Wesentlichen die Form von Kreisbögen aufweisen.

4. Rohr nach Anspruch 3, wobei der zweite Schleifenteil (12b) gegen eine Innenwand des Rohrs gelötet ist.

5. Rohr nach Anspruch 4, wobei der zweite Schleifenteil (12b) auf eine zweite Flachstelle (44) gelötet ist, die den Beginn des ersten Schleifenteils (12a) begrenzt.

6. Rohr nach einem der Ansprüche 2 bis 5, wobei der erste Schleifenteil (12a) aus einer zweiten Flachstelle (44) gebildet ist, die von einer Krümmung um 180° gefolgt ist, die durch eine dritte Flachstelle (45), die gemeinsam mit dem zweiten Schleifenteil (12b) ist, fortgesetzt wird, wobei diese dritte Flachstelle (45) durch eine Krümmung um 180° fortgesetzt wird, die mit einer vierten Flachstelle (46) endet, die sandwichartig zwischen der zweiten Flachstelle (44) und der dritten Flachstelle (45) angeordnet ist.

7. Rohr nach einem der Ansprüche 2 bis 6, wobei die Trennwand (12) eine erste Dicke (e₂), die geringer als die Dicke (e₁) des Rohrs (10) an dem ersten Schleifenteil (12a) ist, und eine zweite Dicke (e₂) aufweist, die geringer als die erste Dicke (e₂) an dem zweiten Schleifenteil (12b) ist.

8. Rohr nach einem der vorhergehenden Ansprüche, wobei eine erste Fläche (111) des Rohrs mit einer Lötschicht (21) bedeckt ist, während eine zweite Fläche (112) des Rohrs mit einer Korrosionsschutzschicht (22) bedeckt ist, wobei die zweite Fläche (112) das Innenvolumen des Rohrs begrenzt.

9. Wärmetauscher, der geeignet ist, eine Wärmeenergie zwischen einem ersten Medium und einem Fluid auszutauschen, das im Inneren eines Rohrs nach einem der vorhergehenden Ansprüche zirkuliert.

## Claims

1. Tube (10) for a heat exchanger produced by folding a strip (11), one end (13) of said strip being shaped in such a way as to constitute, after folding, a separating partition (12) having a curvilinear profile, said curvilinear profile is a looped profile, said separating partition (12) being closed on itself, **characterized in that** said separating partition (12) has along said loop a thickness (e₂) less than the thickness (e₁) of the tube (10).

2. Tube according to Claim 1, wherein said looped curvilinear profile comprises a first part (12a) of loop and a second part (12b) of loop ending inside the first part (12a) of loop.

3. Tube according to Claim 2, wherein said first (12a) and second (12b) parts of loop are substantially arc-of-circle shaped.

4. Tube according to Claim 3, wherein said second part (12b) of loop is brazed against an inside surface of the tube.

5. Tube according to Claim 4, wherein said second part (12b) of loop is brazed on a second flat section (44) which delimits the start of the first part (12a) of loop.

6. Tube according to any one of Claims 2 to 5, wherein said first part (12a) of loop is constituted by a second flat section (44) followed by a curve through 180° which is followed by a third flat section (45) in common with said second part (12b) of loop, this third flat section (45) is followed by a curve through 180° which ends in a fourth flat section (46) sandwiched between the second flat section (44) and the third flat section (45).

7. Tube according to one of Claims 2 to 6, wherein said separating partition (12) has a first thickness (e₂) less than the thickness (e₁) of the tube (10) over the first part (12a) of loop, and a second thickness (e₃) less than the first thickness (e₂) over the second part (12b) of loop.

8. Tube according to any one of the preceding claims, wherein a first face (111) of the tube is covered with a brazing layer (21) whilst a second face (112) of the tube is covered with a layer (22) protecting against corrosion, said second face (112) delimiting the internal volume of said tube.

9. Heat exchanger able to exchange heat energy between a first medium and a fluid which circulates inside a tube according to any one of the preceding claims.
